Europäisches Patentamt

European Patent Office

Office européen des brevets

(19)

(11) Publication number: **0 091 822**
**B1**

(12) **EUROPEAN PATENT SPECIFICATION**

(45) Date of publication of patent specification: **03.12.86**  (51) Int. Cl.⁴: **B 01 D 29/14, B 01 D 29/38**

(21) Application number: **83302050.6**

(22) Date of filing: **12.04.83**

(54) **Filter method and apparatus.**

(30) Priority: **12.04.82 US 367444**

(43) Date of publication of application:
**19.10.83 Bulletin 83/42**

(45) Publication of the grant of the patent:
**03.12.86 Bulletin 86/49**

(84) Designated Contracting States:
**BE DE FR GB IT NL SE**

(56) References cited:
**CH-A- 541 341
DE-A-2 251 265
DE-C- 151 643
FR-A-1 489 171
FR-A-2 377 219
FR-A-2 411 624
US-A-3 276 594**

(73) Proprietor: **AMSTED Industries Incorporated
3700 Prudential Plaza
Chicago, IL. 60601 (US)**

(72) Inventor: **Janecek, Louis
c/o AMSTED Ind. Inc. 3700 Prudential Plaza
Chicago Illinois 60601 (US)**
Inventor: **Wykoff, Richard H.
c/o AMSTED Ind. Inc. 3700 Prudential Plaza
Chicago Illinois 60601 (US)**

(74) Representative: **Boyes, Kenneth Aubrey et al
Frank B. Dehn & Co. Imperial House
15-19 Kingsway
London WC2B 6UZ (GB)**

Courier Press, Leamington Spa, England.

## Description

The present invention relates to a filtration method and filter apparatus for separating suspended solids from a liquid suspension.

Filtration systems having a filter media for separating suspended solids from a liquid suspension such as a slurry may require the removal of the excess liquid from solid which has been separated from the slurry. One such system may be a coolant recovery system as for example of the type used in industrial machining operations wherein the coolant carrying the waste machine particles are processed to separate the coolant from the waste machine particles. The coolant is recovered and recycled into the machining operation. The separated waste particles after separation through a filter media may be in the form of a sludge. These sludges may present handling or disposal problems because of excessive quantities of liquid retained therein. In other liquid suspension filtration systems it may be desirable to recover the solid for further use rather than the liquid as described above. In such systems it may be desirable to remove the maximum quantity of liquid in order to minimize or eliminate drying of the separated suspended matter by the application of heat or the like.

The recovery of coal fines of metallurgical coal resulting from coal washings is one such application in which it is desirable that the maximum quantity of the wash liquid be extracted from the fines in order that such fines may be suitable for use in metallurgical processes. In other liquid suspension filtration systems, it may be desirable to recover both the liquid and solid for further use.

Filtering systems in accordance with the first part of claim 1 are known from US—A—3,276,594 and from FR—A—1,489,171. In these known systems, an inflatable membrane is arranged internally to compact the solids accumulated on the filter section.

In accordance with the present invention, it is proposed to provide a liquid suspension filtration method and apparatus for removing liquid from the suspended solids separated from the liquid and deposited on a filter media or septum through which the liquid suspension carrying the solids has passed.

Thus, the invention provides a method for separating suspended solids from a liquid suspension comprising introducing said liquid at substantially atmospheric pressure into a pressure vessel having an upstanding filter section, maintaining the level of said liquid above the uppermost end of the filter section as said liquid suspension is filtered through said filter section whereby the suspended solids are accumulated on said filter section and the filtrate flows outwardly of said pressure vessel, ceasing flow to said vessel when the suspended solids are of such a thickness that flow of the filtrate therethrough is reduced and compacting the solids accumulated on said filter section by the application of pneumatic pressure, characterised in that said pneumatic pressure is introduced into said vessel above said liquid level and acts directly on the liquid suspension to cause continued flow through the layer of solids accumulated on said filter section, and in that the pneumatic pressure is maintained above atmospheric in said vessel while the level of said liquid drops so that the pneumatic pressure acts on the layer of accumulated solids above said liquid thereby to compress said suspended solids and extract further filtrate from said layer.

When the excess liquid is displaced from the filter section, the remaining liquid suspension is removed from the vessel and the pneumatic pressure is released. Thereafter the cake is removed from the septum and discharged from the vessel.

The above described arrangement is suitable for the extraction of liquids from suspended solids which are substantially air impervious when separated and deposited on the filter section. However, should the separated suspended solid not have the impervious characteristic, the arrangement of the present invention may be provided with a flexible fluid impervious curtain which overlies the filter section. The curtain is constructed and arranged so as to be spaced from the filter section to permit the passage of liquid through the latter. Upon the application of the pneumatic pressure to gradually displace the liquid from the filter section, the flexible curtain is forced into face to face engagement with the solids accumulated on the filter section by the pneumatic pressure acting thereon to compress the solids and extract liquid therefrom in substantially the same manner as described above.

In the accompanying drawings:

Fig. 1 is an elevational view partially in cross section of a preferred embodiment of a filter apparatus according to the present invention and showing the components thereof in an operating and filtering position.

Fig. 2 is an elevational view of the apparatus shown in Fig. 1 but showing the components in a position for extracting liquid from the suspension being filtered.

Fig. 2A is a fragmentary cross sectional view of the filter apparatus showing the closure in its open position with solid cake being discharged through the outlet.

Fig. 3 is a fragmentary cross sectional view taken generally along the lines 3—3 of Fig. 1.

Fig. 4 is a fragmentary cross sectional view taken generally along the lines 4—4 of Fig. 2.

Fig. 5 is a fragmentary cross sectional view taken generally along the line 5—5 of Fig. 2.

Fig. 6 is an enlarged fragmentary cross sectional view taken generally along the lines 6—6 of Fig. 5.

Fig. 7 is a horizontal fragmentary cross section through the upright wall of the filter apparatus and showing in particular an optional auxiliary tube for dislodging suspended matter cake.

As shown in the drawings, a filter apparatus 10 comprises a vessel 12 having a porous filter section 14, a fluid inlet means 16 for introducing a liquid suspension into the vessel, a fluid impervious curtain 18 for compressing suspended solids S accumulated on the surface of the filter section 14, and pneumatic pressure means 19 for applying pressure forces on the liquid and compressing the solids against the filter section 14. The vessel 12 may be supported on suitable framing 13.

In the form shown, the vessel 12 is of generally cylindrical shape including an upstanding wall section 15 constructed to provide an outlet 17 for the suspended matter of the liquid suspension being filtered, a top section 20 and a bottom section 22. The vessel is constructed to withstand the higher than atmospheric pressures to which the vessel 12 is subjected during use as more fully explained hereinafter.

The wall section 15 includes an upper cylindrical end 23 having attached thereto the filter section 14. As shown the filter section 14 includes a wire screen 24 which may be of a larger mesh than that required to perform the filtering function. The wire screen is attached to the end 23. A spiral wound rod 26 is fixed to the cylindrical upper end 23 and to lower cylindrical section 28. Fixed to the spiral rod 26 are a plurality of angularly spaced upright reinforcing bars 30 fixed also to the upper and lower cylindrical sections 23 and 28.

Hingedly attached to the upper cylindrical end 23 by means of hinge 32 is a dome cover 34. The mating edges of the cover 34 and cylindrical end 23 may be sealed by a suitable sealing gasket (not shown).

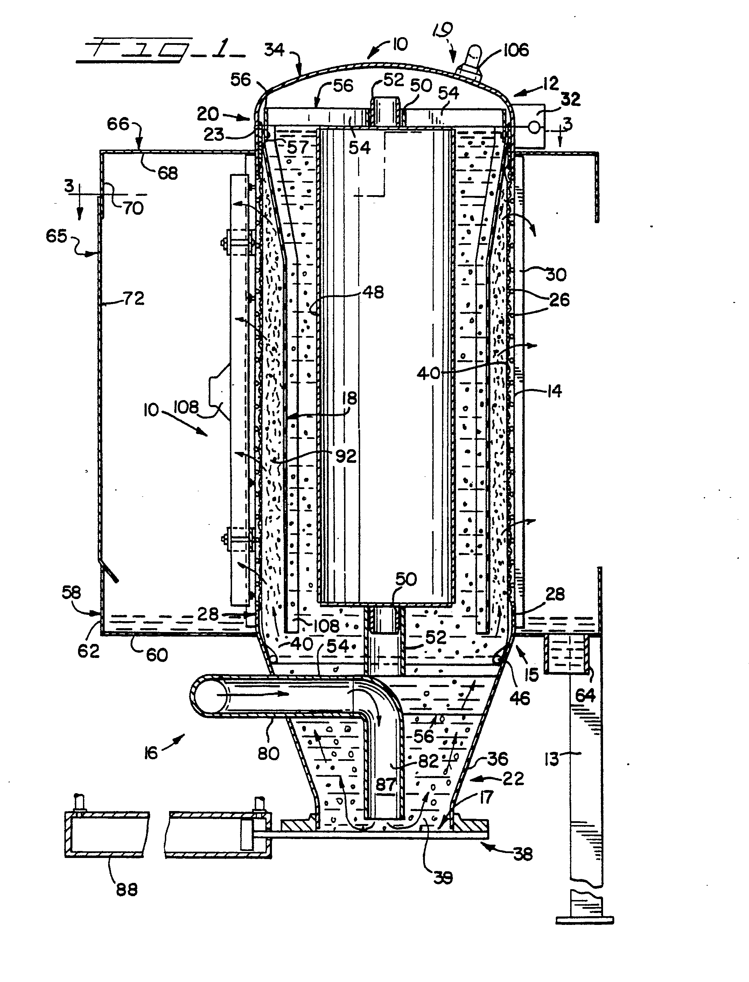

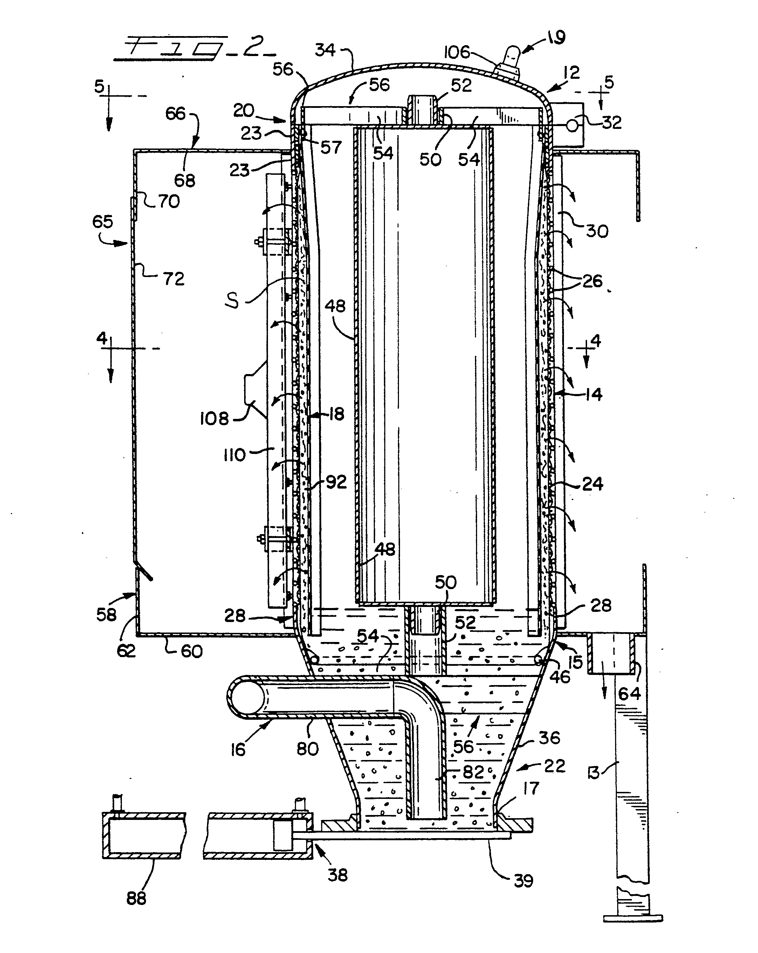

The bottom or outlet section 22 may be in the shape of an inverted truncated cone 36 welded to the lower cylindrical section 28. A closure assembly such as a slide valve 38 is fixed to the cone 36 to selectively open and close the outlet or opening 17 through which the substantially liquid free solid or cake is discharged as more fully to be described hereinafter. The valve assembly 38 may be of conventional two-way solenoid or pneumatic two-way construction so that valve 38 is movable between an open (Fig. 2A) and closed (Fig. 2) position over the opening 17.

In the embodiment shown the filter section 14 includes a filter media sleeve 40 disposed along the interior of the vessel 12 to overlie the wire screen 24. It is to be understood however that in some applications of the filter apparatus 10, such media may not be used, but rather the mesh of the screen or wall structure may be so modified that a separate filter media is not required. As shown, the filter media 40 is in the form of a tubular sleeve made from a porous material either woven or nonwoven. Such filter materials are well known in the art.

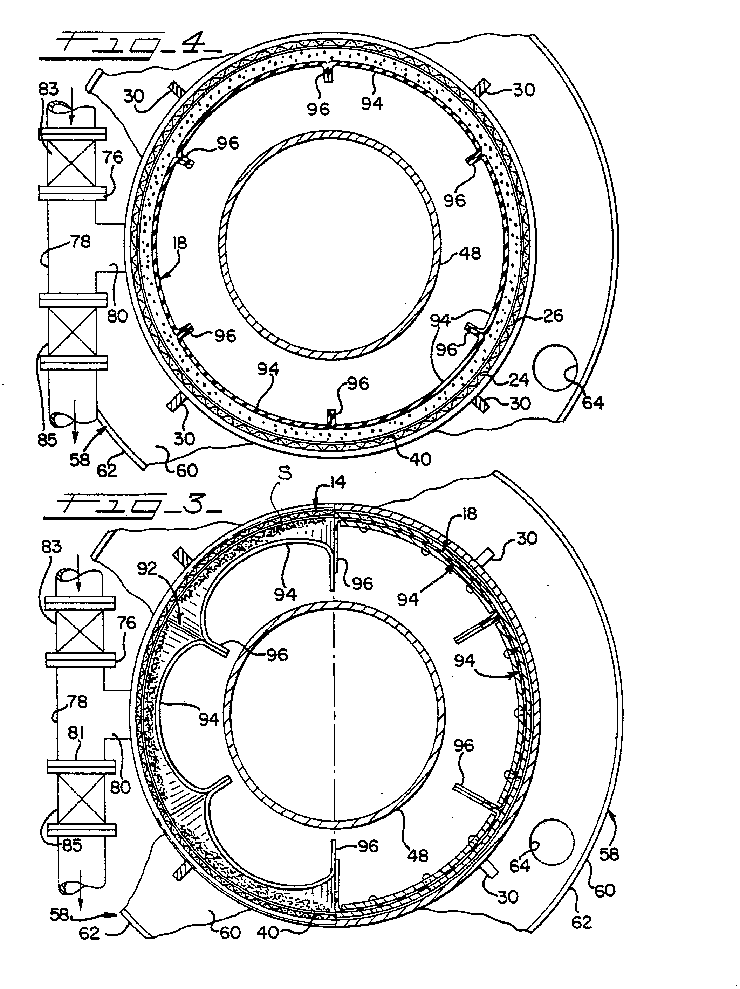

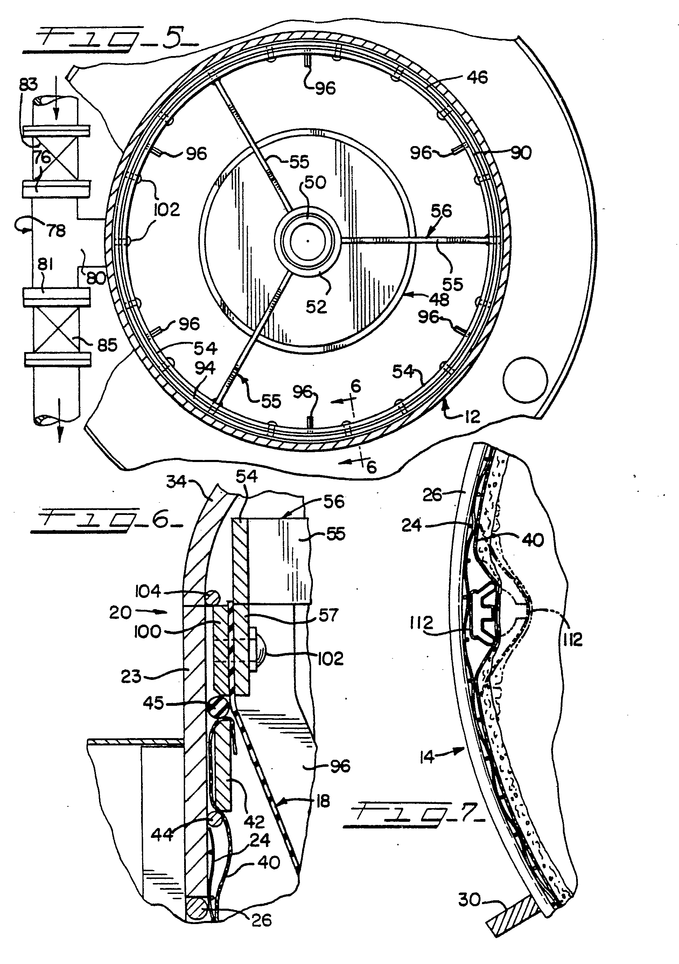

As shown in Fig. 6, the filter media 40 is removably attached to the vessel 12 at its upper end. The upper free end of the sleeve 40 is draped over a hoop 42 which is releasably gripped between a rod 44 of circular cross section and a vertically spaced resilient O-ring 45. When the hoop 42 is seated between the rods 44 and O-ring 45, the sleeve 40 is securely clamped along the opposite edge of the hoop 42.

The lower end of the filter media sleeve 40, Figs. 1 and 2, is provided with a seam which receives a hoop 46 of circular cross section. The hoop 46 serves to hold the filter media 40 in sealing engagement with the surface of the base 36 as shown.

The capacity of the vessel 12 may be decreased by a hollow sealed drum 48 to reduce the volume of pressurized air which is subsequently charged into the vessel as more fully to be explained hereafter. The drum 48 is coaxially disposed within the vessel by means of cylindrical shafts 50 fixed to the upper and lower ends thereof. The cylindrical shafts 50 seat within complementary opened ended cylindrical supports or bosses 52.

The cylindrical bosses 52 are fixed to a circular strap 54 by means of radial legs 55 to form spiders 56. The upper one of the spiders 56 is seated on a hoop 57 and the lower spider 56 is removably seated in the truncated cone section 36. In this manner both the drum 48 and its associated spider support 56 may be removed from the vessel.

A trough 58 for collecting the filtrate is disposed about the exterior of the lower section of the vessel 12. The trough 58 is defined by an annular base 60 and an upstanding flange 62. A filtrate outlet 64 is provided in the annular base 60.

A filtrate or trough cover structure 65 is disposed about the filter section 14 and includes an annular hood 66 defined by an annular top panel 68 and a downwardly depending flange 70. Disposed between the depending flange 70 and the upstanding flange 62 is a removable side wall panel 72 which permits access to the filter section 14.

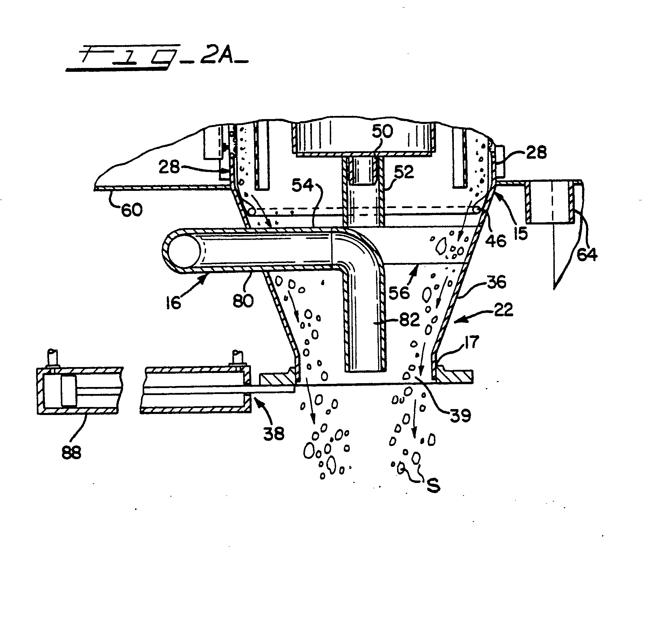

The fluid inlet arrangement as shown in Figs. 1, 2 and 5 includes a pump (not shown) and piping from a liquid suspension tank (not shown). The pump is connected to a branch 76 of a T-connection 78. The T-connection 78 has a common stem 80 to which is attached piping 82 extending into the base or truncated section 22 of the vessel 12. A branch 81 is connected to a discharge pipe for returning liquid suspension to the tank. A valve 83 is connected in the branch 76 for controlling the flow from the tank into the vessel 14 and a valve 85 is connected to the branch 81 for directing flow of the liquid suspension from the vessel 12 to the tank.

The pipe opening 87 is directed downwardly toward the slide of a closure member such as a valve 38 which is movable between a normal closed position across the base opening 17 as shown in Fig. 1 and an open position as shown in Fig. 2. The slide valve 38 is actuated by a fluid actuated cylinder 88 connected to a suitable source of pressurized fluid.

The curtain 18 is loosely suspended from its upper end within the vessel 14 and has its lower end spaced from the side wall so as to provide an annular chamber 92 contiguous with the filter section into which the liquid suspension flows. The curtain is made from a flexible fluid impervious material such as rubber or a plastic material.

The curtain 18 may be a unitary structure formed as by molding or may be fabricated from a plurality of sheets.

As shown in Fig. 4 the curtain 18 is in the form of a tubular sleeve comprising a plurality of panels or sections 94 which are bonded together along adjacent edges as by adhesive vulcanizing, or heat sealing or the like to form inwardly extending radial seams 96. The sum of the widths of the panels 94 is such as to snugly conform with the inner circumference of the vessel 12 at the filter section 14. Upon filling the vessel 12, the seams 96, which tend to impart lengthwise rigidity to the curtain, cause the panels 94 to be irregularly spaced inwardly away from the surface of the filter section 14 as shown in Fig. 3. In this manner the major portion of the liquid suspension in the vessel is directed into a chamber 92 defined between the filter section 14 and curtain 18 for passage through the filter section 14. When the vessel 12 is empty and under normal atmospheric conditions the curtain panels 94 are loosely disposed within the vessel 14 in an irregular manner as shown in Fig. 1.

As shown in particular in Fig. 6, the upper end of curtain 18 is clamped between a pair of hoops 57 and 100 and is fastened thereto by screws 102. The inner one of the hoops 100 is removably seated between the circular rod 104 fixed to the vessel 12 as by welding and the O-ring 45 spaced therefrom to resiliently grip the hoop 100 about its edges. It is to be noted that the rods 44 and 104 and the O-ring 45 are located relative to each other to provide two adjacent seats for the hoops 42 and hoop 100, respectively, so that the O-ring 45 is common to grip both of the hoops 42 and 100 seated therein. Should the unit 10 be used in an application wherein a curtain is not required, a single hoop (not shown) may be substituted between the rod 104 and the O-ring 45 to complete the assembly. The hoops 104 and 57 also serve to support the spider hoop 54 of the upper spider assembly 56.

The pneumatic pressure means 19 located on the upper section 20 includes compressed air nozzle 106 mounted on the cover 34. The nozzle 106 is connected by piping to a suitable source of compressed air (not shown). The compressed air source may be of the type conventionally used in manufacturing facilities and which is capable of delivering the desired pressure and volume. Typically such conventional types of air compresser delivers about 100 psi.

Blow-off means 108 connected to a suitable source of pressurized air are mounted on radially spaced supports 110 fixed to the upper and lower sections of the vessel 12. The blow-off means 108 are operative to assist in the removal of the accumulated solids cake on the filter sections. As shown in Fig. 7 additional inflatable tube means 112 extending along the length of the screen 24 and the filter media 40 may also be used to separate solids from this media. As shown upon inflation by a suitable source of fluid under pressure the tubes are inflated to the phantom line position to cause that solid layer to be separated.

In operation, the liquid suspension is introduced into the vessel 12 by actuation of the pump (not shown) so as to cause flow of the liquid from the liquid suspension containing tank through the open valve 83 into the branch 76 and piping 82 downwardly toward the closed slide valve 38. The valve 85 in the other branch 81 is closed so that there is no return flow of the liquid suspension to the tank.

Assuming the liquid suspension is of the type containing a solid which accumulates on the filter screen in a manner which is substantially impervious to air flow when of a significant thickness, such as a kaolin, the curtain 18 is removed prior to introducing the liquid suspension. The curtain 18 may be removed by opening the cover 34 and removing the hoop 100 from its gripping engagement between the rod 104 and O-ring 45. A separate hoop may be replaced for the curtain hoop 104. It is to be noted that the upper spider 56 is also lifted from its resting position on the hoop 57. After the curtain is removed the spider 54 may be seated on the replacement hoop or hoops.

Liquid suspension is continuously introduced into the vessel whereupon the suspension is filtered through the filter section 14 and the solids are accumulated thereon. The filtrate drops into the trough 60 from which it flows through the outlet 64 for disposal or recovery. The solid, such as kaolin, is accumulated on the filter section 14 and as the thickness of kaolin accumulates, the resistance to flow therethrough increases so that the suspension fills the vessel and the pressure increases. When the pressure, as detected by a pressure sensitive detector (not shown) is at a predetermined set point. Further flow into the vessel is cut off by closure of the tank inlet valve 83.

The compressed air nozzles 106 are then opened to maintain the vessel charged with a pneumatic or air pressure higher than the above set point. This causes the liquid to continue to flow through the accumulated layer of solids on the filter section 14. As a result the liquid level within the vessel drops so that the pressure compresses the solids that are exposed above the upper liquid level against the filter media 40 to further extract liquid therefrom. At the same time, the pneumatic pressure blowing therethrough the exposed solids serves also to create a drying effect on the accumulated solids. In this manner the accumulated solids are formed into a substantially liquid-free cake on the filter surface.

When the liquid level drops below the filter section 14 the valve 85 is opened to withdraw the remaining liquid suspension from the vessel through an inlet 82 and branch 81 for return to the liquid suspension carrying tank. The slide valve 38 is then opened. The cake solids may be removed by cake breaker means such as pneumatic jets 108 radially spaced about the vessel, as shown, and/or expandable tubes 112 are inflated to break the solids as shown in Fig. 7. The separated cake drops through the opening 39 into a hopper. To resume operation after the cake is removed, the slide valve 38 and the valve 85 are closed and the intake valve 83 opened so that the pump again feeds liquid suspension into the vessel for further filtration.

In the event that the suspended solid is not capable of providing substantial resistance to the flow of fluid through the filter section 14, the curtain 18 is installed prior to introducing the suspension. The liquid suspension is pumped into the vessel over the filter section 14 so that it may be filtered through the latter as shown in Fig. 4. The suspended solid accumulates on the filter media 40 of the filter section 14 and the filtrate is collected in the trough 60 in the same manner as previously described. When the filtration pressure is at the set point or after a timed interval, the valve 83 from the pump is closed to shut off flow from the tank. The pneumatic means 106 are actuated to cause continued flow through the filter section and as the liquid level progressively drops, as heretofore described, the pneumatic forces are operative to cause pressure to be exerted on the exposed surface of the curtain above the liquid so that further liquid is squeezed from the accumulated layer of solids until the liquid level drops below the lower edge of the curtain.

At this time the compressed air flows upwardly into the space 92 occupied by the accumulated layer so that the air pressure within the chamber is released and the nozzles 106 may be closed. The outlet valve discharge 85 is opened and the remaining liquid suspension in the vessel removed through the pipe 82 and branch 81 to return the suspension back to the tank.

After the liquid suspension is removed, the slide valve 38 is opened for discharge of the cake. Upon inactivation of the pneumatic nozzle 106, the curtain panels 94 tend to flex irregularly away from the filter section causing the cakes to separate and be discharged through the opening 39 as shown in Fig. 2A. If such flexing of the curtain fails to occur the remaining cake on the filter section may be removed by the shaker means such as the pneumatic jets or expandable tubes, as heretofore described.

**Claims**

1. A method for separating suspended solids from a liquid suspension comprising introducing said liquid at substantially atmospheric pressure into a pressure vessel having an upstanding filter section, maintaining the level of said liquid above the uppermost end of the filter section (14) as said liquid suspension is filtered through said filter section (14) whereby the suspended solids (8) are accumulated on said filter section and the filtrate flows outwardly of said pressure vessel (12), ceasing flow to said vessel when the suspended solids are of such a thickness that flow of the filtrate therethrough is reduced, and compacting the solids accumulated on said filter section by the application of pneumatic pressure, characterised in that said pneumatic pressure is introduced into said vessel 12 above said liquid level and acts directly on the liquid suspension to cause continued flow through the layer of solids accumulated on said filter section (14), and in that the pneumatic pressure is maintained above atmospheric in said vessel while the level of said liquid drops so that the pneumatic pressure acts on the layer of accumulated solids (S) above said liquid thereby to compress said accumulated solids and extract further filtrate from said layer.

2. A method as claimed in claim 1 further including the step of disposing a fluid impervious member (18) over said layer of solids (S) above said liquid when said liquid flow is stopped so that said pneumatic pressure is operative to compress said solids between said fluid impervious member and said filter section (14).

3. A method as claimed in claim 1 or 2, further including the steps of removing the liquid remaining in said vessel below said filter section, separating said solids layer from said filter screen, and discharging the solids through the space formerly occupied by said liquid.

4. Filter apparatus for carrying out the method of claim 1, said apparatus comprising a pressure vessel (12) including a filter section (14) for separating suspended solids from said liquid suspension, an inlet (16) for introducing said liquid suspension into said vessel (12) to cover the surface area of said filter section (14), and pneumatic pressure means (19) operable when said flow of liquid suspension into said vessel is shut off to introduce pneumatic pressure into the vessel, characterised in that the pneumatic pressure means (19) is operable to introduce pneumatic pressure into said upper region of the vessel which acts directly on the upper surface of the liquid suspension contained therein.

5. An apparatus as claimed in claim 4, further comprising a fluid impervious flexible curtain (18) comprising an open ended sleeve attached at one end of said vessel (12) along one side of said filter section (14) and the other loosely suspended in a radially spaced relationship from said filter section along the opposite side thereof to provide a flow passage for said liquid suspension to said filter section.

6. An apparatus as claimed in claim 5, wherein said curtain (18) is free from said vessel (12) at said other end and is sized so that when subjected to the pressure forces of said pneumatic pressure said curtain substantially conforms to the shape of said filter section (14) whereby solids (S) accumulated on said filter section are compressed between said filter section and said curtain.

7. An apparatus as claimed in any of claims 4 to 6, wherein said vessel further comprises an open end (22) through which said solids are discharged after separation from said filter section, and valve means (38) for opening and closing said open end.

8. An apparatus as claimed in claim 7 including means (82) for withdrawing liquid from said vessel when the liquid level is below the lowermost end of said filter section, whereafter said valve means (38) may be moved to an open position and solids separated from said filter section may be discharged through said bottom open end.

9. An apparatus as claimed in claim 8, wherein the vessel is cylindrical and said open end and said means (82) for withdrawing liquid from said vessel are coaxially disposed with respect to the axis of said vessel to facilitate the removal of said liquid and said separated solids.

10. An apparatus as claimed in claim 9, wherein the interior of said cylindrical vessel is provided with a coaxial filler (48) to reduce the liquid capacity of said vessel.

11. An apparatus as claimed in any preceding claim further comprising pneumatic jets mounted (108) to direct an air flow through said filter section (14) toward the interior of said vessel for assisting in the removal of the compressed layer of solids (S) from said filter section (14).

12. An apparatus as claimed in any of claims 4 to 11 wherein said filter section (14) includes a reinforced screen (24) and a flexible porous filter media (40) overlying said screen on the interior of said vessel, and further comprising displacement means (112) disposed between said screen (24) and said flexible filter media for flexing said flexible filter media and thereby causing accumulated solids to be separated therefrom.

**Patentansprüche**

1. Verfahren zum Abscheiden von suspendierten festen Körpern aus einer flüssigen Suspension, bei dem die Flüssigkeit bei im wesentlichen Atmosphärendruck in ein Druckgefäß eingebracht wird, das einen aufrechtstehenden Filterbereich aufweist, bei dem der Pegel der Flüssigkeit über dem obersten Ende des Filterbereiches (14) gehalten wird, wenn die flüssige Suspension durch den Filterbereich (14) gefiltert wird, wobei die suspendierten festen Körper (8) an dem Filterbereich angesammelt werden und das Filtrat aus dem Druckgefäß (12) herausfließt, bei dem der Fluß zu dem Gefäß beendet wird, wenn die suspendierten, festen Körper eine solche Dicke aufweisen, daß der hindurchtretende Fluß des Filtrates verringert wird, und bei dem die an dem Filterbereich angesammelten festen Körper durch die Anwendung eines pneumatischen Druckes verdichtet werden, dadurch gekennzeichnet, daß der pneumatische Druck in dem Gefäß (12) oberhalb des Flüssigkeitspegels aufgebaut wird und direkt auf die flüssige Suspension wirkt, um einen ununterbrochenen Fluß durch die Schicht der an dem Filterbereich (14) angesammelten festen Körper zu bewirken, und daß der pneumatische Druck in dem Gefäß über dem Atmosphärendruck gehalten wird, während der Pegel der Flüssigkeit abfällt, so daß der pneumatische Druck auf die Schicht der über der Flüssigkeit angesammelten festen Körper (S) einwirkt um dadurch die angesammelten festen Körper zu komprimieren und weiteres Filtrat aus der Schicht herauszuziehen.

2. Verfahren nach Anspruch 1, bei dem bei einem weiteren Schritt ein fluidundurchlässiges Teil (18) über der Schicht der über der Flüssigkeit vorhandenen festen Körper (S) angeordnet wird, wenn der Flüssigkeitsfluß beendet wird, so daß der pneumatische Druck wirksam ist, um die festen Körper zwischen dem fluidundurchlässigen Teil und dem Filterbereich (14) zusammenzudrücken.

3. Verfahren nach Anspruch 1 oder 2, bei dem weiterhin Schritte ausgeübt werden, um die in dem Gefäß unterhalb des Filterbereiches verbleibende Flüssigkeit zu entfernen, die aus den festen Körpern bestehende Schicht von dem Filtersieb zu trennen und die festen Körper durch den früher durch die Flüssigkeit eingenommenen Raum zu entladen.

4. Filtereinrichtung zur Ausführung des Verfahrens nach Anspruch 1, bei der ein Druckgefäß (12) einen Filterbereich (14) zum Abscheiden von suspendierten, festen Körpern aus der flüssigen Suspension, einen Einlaß (16) zum Einführen der flüssigen Suspension in das Gefäß (12) derart, daß sie den Oberflächenbereich des Filterbereiches (14) bedeckt, und eine penumatische Druckeinrichtung (19) aufweist, die betätigbar ist, wenn der Fluß der flüssigen Suspension in das Gefäß abgestellt wird, um den pneumatischen Druck in das Gefäß einzuführen, dadurch gekennzeichnet, daß die pneumatische Druckeinrichtung (19) betätigbar ist, um den pneumatischen Druck in dem oberen Bereich des Gefäßes aufzubauen, der direkt auf die obere Fläche der darin enthaltenen flüssigen Suspension einwirkt.

5. Einrichtung nach Anspruch 4, bei der außerdem ein fluidundurchlässiger, flexibler Vorhang (18) vorgesehen ist, der ein Hülse mit einem offenen Ende aufweist, die an einem Ende des Gefäßes (12) entlang einer Seite des Filterbereiches (14) befestigt ist und deren anderes Ende von dem Filterbereich in radialer Richtung beabstandet entlang der gegenüberliegenden Seite des Filterbereiches lose herabhängt, um einen Flüssigkeitsdurchgang für die flüssige Suspension zum Filterbereich zu bilden.

6. Einrichtung nach Anspruch 5, bei der der Vorhang (18) am anderen Ende frei von Gefäß (12) und derart bemessen ist, daß er sich dann, wenn er den Druckkräften des pneumatischen Druckes unterworfen ist, im wesentlichen der Form der Filterbereiches (14) anpaßt, wodurch an dem Filterbereich angesammelte feste Körper (S) zwischen dem Filterbereich und dem Vorhang zusammengedrückt werden.

7. Einrichtung nach einem der Ansprüche 4 bis 6, bei der das Gefäß außerdem ein offenes Ende (22), durch das die festen Körper nach der Abtrennung von dem Filterbereich entladen werden, und eine Ventileinrichtung (38) zum Öffnen und Schließen des offenen Endes aufweist.

8. Einrichtung nach Anspruch 7, bei der eine Einrichtung (82) zum Abziehen von Flüssigkeit aus dem Gefäß vorgesehen ist, wenn der Flüssigkeitspegel unterhalb des untersten Endes des Filterbereiches liegt, woraufhin die Ventileinrichtung (38) in eine geöffnete Position bewegt werden kann und durch den Filterbereich abgeschiedene feste Körper durch das offene Bodenende entladen werden können.

9. Einrichtung nach Anspruch 8, bei der das Gefäß zylindrisch ausgebildet ist und das offene Ende und die Einrichtung (82) zum Abziehen der Flüssigkeit aus dem Gefäß koaxial in Bezug auf die Achse der Gefäßes angeordnet sind, um die Entfernung der Flüssigkeit und der abgeschiedenen festen Körper zu erleichtern.

10. Einrichtung nach Anspruch 9, bei der das Innere des zylindrischen Gefäßes ein koaxiales Füllteil (48) aufweist, um das Flüssigkeitsfassungsvermögen des Gefäßes zu verringern.

11. Einrichtung nach einem der vorhergehenden Ansprüche, bei der außerdem pneumatische Düsen (108) so befestigt sind, daß sie einen Luftfluß durch den Filterbereich (14) in Richtung auf das Innere des Gefäßes lenken, um die Entfernung der verdichteten Schicht von festen Körper (S) von dem Filterbereich (14) zu unterstützen.

12. Einrichtung nach einem der Ansprüche 4 bis 11, bei der der Filterbereich (14) eine verstärkte Siebwand (24) und ein flexibles, poröses Filtermedium (40) enthält, das an der Innenseite des Gefäßes auf der Siebwand aufliegt und bei der außerdem eine Verschiebeeinrichtung (112) zwischen der Siebwand (24) und dem flexiblen Filtermedium angeordnet ist, um das flexible Filtermedium zu biegen und dadurch zu bewirken, daß angesammelte feste Körper von dem Filtermedium getrennt werden.

**Revendications**

1. Procédé pour séparer des solides en suspension d'une suspension liquide, consistant à introduire ledit liquide à une pression à peu près égale à la pression atmosphérique dans un récipient à pression qui comprend une section filtrante verticale, maintenir le niveau dudit liquide au-dessus de l'extrémité supérieure de la section filtrante (14) pendant que ladite suspension liquide est filtrée à travers ladite section filtrante (14), le résultats étant que les solides en suspension (8) s'accumulent sur ladite section filtrante et que le filtrat s'écoule à l'extérieur dudit récipient à pression (12), interrompre l'introduction dans ledit récipient lorsque les solides en suspension ont atteint une épaisseur telle que le débit d'écoulement du filtrat à travers ces solides est réduit, et tasser les solides accumulés sur ladite section filtrante, par application d'une pression pneumatique, caractérisé en ce que ladite pression pneumatique est introduite dans ledit récipient (12) au-dessus du niveau dudit liquide et agit directement sur la suspension liquide pour la contraindre à continuer à s'écouler à travers la couche de solides accumulés sur ladite section filtrante (14), et en ce que la pression pneumatique est maintenue à une valeur supérieure à la pression atmosphérique dans ledit récipient pendant que le niveau dudit liquide descend, de manière que la pression pneumatique agisse sur la couche de solides accumulés (S) au-dessus dudit liquide, pour comprimer de cette façon, lesdits solides accumulés et extraire une nouvelle quantité de filtrat de ladite couche.

2. Procédé selon la revendication 1, comprenant en outre la phase consistant à disposer un élément imperméables aux fluides (18) sur ladite couche de solides (S) au-dessus dudit liquide lorsque ladite introduction du liquide est arrêtée, de sorte que ladite pression pneumatique agit pour comprimer lesdits solides entre ledit élément imperméable aux fluides et ladite section filtrante (14).

3. Procédé selon la revendication 1 ou la revendication 2, comprenant en outre les phases consistant à évacuer le liquide restant dans ledit récipient au-dessous de ladite section filtrante, détacher ladite couche de solides de ladite toile filtrante et décharger les solides à travers l'espace qui était précédemment occupé par ledit liquide.

4. Appareil de filtration pour la mise en oeuvre du procédé selon la revendication 1, ledit appareil comprenant un récipient à pression (12) qui comprend une section filtrante (12) destinée à séparer les solides en suspension de ladite suspension liquide; une entrée (16) destinée à introduire ladite suspension liquide dans ledit récipient (12) pour couvir la surface de ladite section filtrante (14) et des moyens de pression pneumatiques (19) qui, lorsque ladite introduction de la suspension liquide dans ledit récipient est arrêtée, entrent en action pour introduire une pression pneumatique dans le récipient, caractérisé en ce que les moyens de pression pneumatique (19) peuvent être mis en action pour introduire la pression pneumatique dans ladite région supérieure du récipient, cette pression agissant directement sur la surface supérieure de la suspension liquide contenue dans le récipient.

5. Appareil selon la revendication 4, comprenant en outre un rideau souple (18) imperméable aux fluides, qui comprend un manchon ouvert à ses extrémités et fixé à une première extrémité du récipient (12), le long d'un côté de ladite section filtrante (14) tandis que l'autre extrémité est suspendue sans fixation dans une position espacée radialement de ladite section filtrante, le long du côté opposé de cette section, pour former un passage d'écoulement pour la suspension liquide, en lui donnant accès à ladite section filtrante.

6. Appareil selon la revendication 5, dans lequel ledit rideau (18) est séparé dudit récipient (12) à ladite autre extrémité et est dimensionné de telle manière que, lorsqu'il est soumis aux forces de pression de ladite pression pneumatique, ledit rideau épouse pratiquement la forme de ladite section filtrante (14), le résultat étant que les solides (S) accumulés sur ladite section filtrante sont comprimés entre ladite section filtrante et ledit rideau.

7. Appareil selon l'une quelconque des revendications 4 à 6, dans lequel ledit récipient comprend en outre une extrémité ouverte (22) à travers laquelle lesdits solides sont déchargés après avoir été détachés de ladite section filtrante, et des moyens (38) formant vanne, qui permettent d'ouvrir et de fermer ladite extrémité ouverte.

8. Appareil selon la revendication 7, comprenant des moyens (82) servant à évacuer le liquide dudit récipient lorsque le niveau du liquide se trouve au-dessous de l'extrémité inférieure de ladite section filtrante, après quoi lesdits moyens formant vanne (38) peuvent être amenés à une position ouverte et les solides détachés de ladite section filtrante peuvent être déchargés à travers ladite extrémité ouverte intérieure.

9. Appareil selon la revendication 8, dans lequel le récipient est cylindrique et ladite extrémité ouverte et lesdits moyens (82) servant à évacuer ledit liquide dudit récipient sont disposés coaxialement par rapport à l'axe dudit récipient pour faciliter l'évacuation dudit liquide et desdits solides séparés.

10. Appareil selon la revendication 9, dans lequel le volume intérieur dudit récipient cylindrique est muni muni d'une masse de remplissage coaxiale (48) servant à réduire la capacité de liquide dudit récipient.

11. Appareil selon une quelconque des revendications précédentes, comprenant en outre des buses pneumatiques (108) montées pour projeter un flux d'air à travers ladite section filtrante (14), vers l'intérieur dudit récipient, pour contribuer à détacher la couche comprimée de solides (S) de ladite section filtrante (14).

12. Appareil selon une quelconque des revendications 4 à 11, dans lequel ladite section filtrante (14) comprend une toile renforcée (24) et un milieu filtrant poreux souple (40) qui recouvre ladite toile sur la face interne dudit récipient, cet appareil comprenant en outre des moyens de déplacement (112) disposés entre ladite toile (24) et ledit milieu filtrant souple pour plisser ledit milieu filtrant souple et, de cette façon obliger les solides accumulées à s'en détacher.

FIG_1_

0 091 822

FIG.2

2

FIG_2A_

FIG_4_

FIG_3_

FIG_5

83
76
78
81
80
85

96
46
96
96
90
55
50
102
56
52
55
48
54
94
55
96
96
54
6
12
6

FIG_6

34
54
56
55
104
20
100
57
102
23
45
44
42
24
40
26
96
18

26
24
40
112
112
14
30

FIG_7